(19) Europäisches Patentamt
European Patent Office
Office européen des brevets

(11) **EP 4 397 542 A1**

(12) **EUROPEAN PATENT APPLICATION**
published in accordance with Art. 153(4) EPC

(43) Date of publication:
**10.07.2024 Bulletin 2024/28**

(21) Application number: **22885167.1**

(22) Date of filing: **29.06.2022**

(51) International Patent Classification (IPC):
**B60Q 1/04** *(2006.01)*          **B60Q 1/08** *(2006.01)*
**F21W 107/10** *(2018.01)*       **F21V 14/00** *(2018.01)*
**F21V 13/04** *(2006.01)*

(52) Cooperative Patent Classification (CPC):
**B60Q 1/00; B60Q 1/04; B60Q 1/076; B60Q 1/08;
F21V 13/04; F21V 14/00;** F21W 2107/10

(86) International application number:
**PCT/CN2022/102101**

(87) International publication number:
**WO 2023/071262 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.10.2021 CN 202111260207**

(71) Applicant: **Huawei Technologies Co., Ltd.
Shenzhen, Guangdong 518129 (CN)**

(72) Inventors:
• **ZHI, Meipeng
Shenzhen, Guangdong 518129 (CN)**
• **FENG, Zhiyong
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **VEHICLE LAMP ASSEMBLY AND TRANSPORTATION VEHICLE**

(57) A headlight assembly comprises a lens, an optical switch, and a detector. The lens is configured to converge reflected light of a target object to obtain a first light beam. The optical switch is configured to reflect the first light beam based on a modulation mode to obtain a second light beam. The detector is configured to detect the second light beam. The optical switch is further configured to: based on a first image, turn off an area of the optical switch and that corresponds to the target object, and turn on an area of the optical switch other than the target object, where the first image is generated based on the second light beam. The headlight assembly can efficiently implement anti-glare at low costs.

FIG. 2

EP 4 397 542 A1

## Description

This application claims priority to Chinese Patent Application No. 202111260207.9, filed with the China National Intellectual Property Administration on October 28, 2021 and entitled "HEADLIGHT ASSEMBLY AND VEHICLE", which is incorporated herein by reference in its entirety.

## TECHNICAL FIELD

This application relates to the communication field, and in particular, to a headlight assembly and a vehicle.

## BACKGROUND

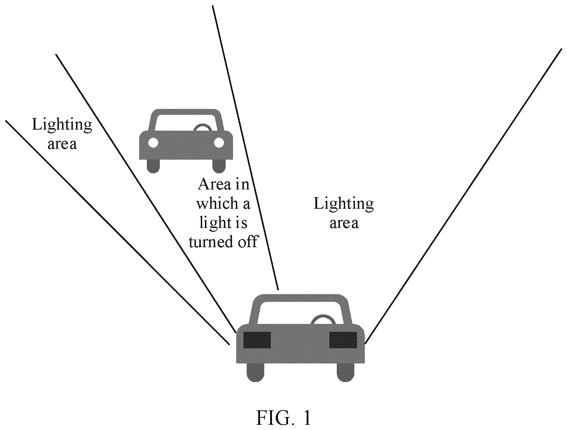

As the most important lighting component of a vehicle, headlights shoulder a very important responsibility when the vehicle travels at night. Especially on roads with poor lighting, a driver needs to turn on high beam headlights to drive safely. In this case, if there is an oncoming vehicle or a preceding vehicle, the high beam headlights of the vehicle may cause glaring impact on a driver of the oncoming vehicle or the preceding vehicle, endangering driving safety. Therefore, high beam headlights with an automatic anti-glare function are produced. An anti-glare principle of the high beam headlights with the automatic anti-glare function or an adaptive driving beam (Adaptive Driving Beam, ADB) is as follows: When a sensor on the vehicle detects the oncoming vehicle or the preceding vehicle, a headlight controller automatically turns off the high beam headlights or turns off a light emitting area that is of the vehicle and that corresponds to the peer vehicle, to implement an anti-glare effect, as shown in FIG. 1.

To implement an ADB function, the sensor on the vehicle needs to detect an orientation of a target. Currently, a mainstream sensor is a common camera. A main component of the common camera is a complementary metal-oxide-semiconductor (complementary metal-oxide-semiconductor, CMOS) chip. Generally, a higher resolution indicates a higher price. In addition, the camera is usually located at a location of a rear view mirror and behind a front windshield. When the ADB function is implemented, coordinate conversion needs to be performed based on a location of the camera and a location of the headlight. Therefore, relative locations of the headlight and the camera need to be calibrated before delivery.

## SUMMARY

Embodiments of this application provide a headlight assembly, to efficiently implement an anti-glare function at low costs.

According to a first aspect, a headlight assembly is provided, including a lens, an optical switch, and a detector. The lens is configured to converge reflected light of a target object to obtain a first light beam. The optical switch is configured to reflect the first light beam based on a modulation mode to obtain a second light beam. The detector is configured to detect the second light beam. The optical switch is further configured to: based on a first image, turn off an area of the optical switch and that corresponds to the target object, and turn on an area other than the target object on the optical switch, where the first image is generated based on the second light beam.

The optical switch is used in a headlight to perform imaging on an external target, and an area corresponding to the target on the optical switch is turned off, so that an effect of turning off a part of an illuminated area of the headlight can be implemented, to implement a purpose of anti-glare. In addition, a common camera is no longer used for imaging, and a process in which coordinate conversion needs to be performed between a location of the camera and a location of the headlight in the conventional technology is also avoided, so that efficiency is improved and costs are reduced.

With reference to the implementation of the first aspect, in a first possible implementation of the first aspect, that the optical switch is configured to reflect the first light beam based on a modulation mode to obtain a second light beam includes: The optical switch is configured to: based on the modulation mode, turn on a first area on the optical switch, and turn off a second area on the optical switch, where the second light beam includes light reflected by the first area.

With reference to the first aspect or the first possible implementation of the first aspect, in a second possible implementation, the headlight assembly further includes an optical switch controller, and the optical switch controller is configured to control the optical switch to reflect the first light beam based on the modulation mode.

With reference to any one of the first aspect or the first and second possible implementations of the first aspect, in a third possible implementation, the optical switch includes a plurality of optical devices, and that the optical switch is configured to reflect the first light beam based on a modulation mode includes: The plurality of optical devices are configured to reflect the first light beam based on the modulation mode.

With reference to any one of the first aspect or the first to third possible implementations of the first aspect, in a fourth possible implementation, the optical switch controller is configured to: control an optical device in the first area to be turned on, and control an optical device in the second area to be turned off.

With reference to any one of the first aspect or the first to fourth possible implementations of the first aspect, in a fifth possible implementation, the optical switch controller is configured to: control an optical device in the area corresponding to the target object to be turned off, and control an optical device in the area other than the target object to be turned on.

The optical device in the area corresponding to the target object is turned off, to implement an anti-glare effect on the target object. The optical device in the area other than the target object is turned on, to implement a lighting effect.

With reference to any one of the first aspect or the first to fifth possible implementations of the first aspect, in a sixth possible implementation, there are a plurality of modulation modes, and each modulation mode corresponds to one second light beam.

With reference to any one of the first aspect or the first to sixth possible implementations of the first aspect, in a seventh possible implementation, a larger quantity of pixels corresponding to the optical devices indicates a larger quantity of modulation modes.

With reference to any one of the first aspect or the first to seventh possible implementations of the first aspect, in an eighth possible implementation, the headlight assembly further includes a processing module; the processing module is configured to generate a second image based on a detection result obtained by the detector by detecting the second light beam, where the second image includes the target object; and the processing module is further configured to detect a corresponding area of the target object on the second image, and generate the first image based on the corresponding area.

A part of an area on the optical switch is turned on or turned off based on the plurality of modulation modes, and the second image is generated by the processing module based on the detection result of the detector, to implement an effect of reconstructing an external environment image.

With reference to any one of the first aspect or the first to eighth possible implementations of the first aspect, in a ninth possible implementation, the optical switch is a digital micromirror device (Digital Micromirror Device, DMD).

With reference to any one of the first aspect or the first to ninth possible implementations of the first aspect, in a tenth possible implementation, the optical switch is a liquid crystal on silicon (Liquid Crystal on Silicon, LCOS).

With reference to any one of the first aspect or the first to tenth possible implementations of the first aspect, in an eleventh possible implementation, the headlight assembly further includes a polarization conversion system PCS, and the PCS is configured to polarize converged reflected light of the target image to obtain the first light beam.

With reference to any one of the first aspect or the first to eleventh possible implementations of the first aspect, in a twelfth possible implementation, the headlight assembly further includes a headlight light source, and the optical switch is further configured to reflect light emitted by the headlight light source.

With reference to any one of the first aspect or the first to twelfth possible implementations of the first aspect, in a thirteenth possible implementation, the headlight assembly further includes a synchronization module; the synchronization module is configured to control the headlight light source, the detector, and the processing module; and when the detector and the processing module work, the headlight light source does not emit light; or when the headlight light source emits light, the detector and the processing module do not work.

According to a second aspect, a vehicle is provided, including the headlight assembly according to any one of the first aspect or the implementations of the first aspect.

According to a third aspect, a headlight anti-glare method is provided, and is applied to the headlight assembly according to any one of the first aspect or the implementations of the first aspect. When an area corresponding to a target object is turned off, light that is emitted by a headlight light source and reflected by the area of the target object does not illuminate the target object. An anti-glare effect is implemented.

According to a fourth aspect, an imaging assembly is provided, including a lens, an optical switch, a detector, a color wheel, and a light source. The light source, the color wheel, and the optical switch are configured to present a first picture. The lens is configured to converge reflected light of a target object to obtain a first light beam. The optical switch is configured to reflect the first light beam based on a modulation mode to obtain a second light beam. The detector is configured to detect the second light beam. The light source, the color wheel, and the optical switch are further configured to present a second picture based on a first image, where the first image is generated based on the second light beam.

The optical switch is used in a projection device to perform imaging on an external target, and a next operation of a user is determined based on an imaging result, to implement an effect of presenting a picture obtained after the operation to the user. In addition, a common camera is no longer used for imaging, and costs are reduced.

With reference to the implementation of the fourth aspect, in a first possible implementation of the fourth aspect, that the optical switch is configured to reflect the first light beam based on a modulation mode includes: The optical switch is configured to: based on the modulation mode, turn on a first area on the optical switch, and turn off a second area on the optical switch, where the second light beam includes light reflected by the first area.

With reference to the fourth aspect or the first possible implementation of the fourth aspect, in a second possible implementation, the imaging assembly further includes a processing module; and the processing module is configured to generate the first image based on a detection result obtained by the detector by detecting the second light beam, where the first image indicates the optical switch to turn on or turn off a part of an area on the optical switch.

With reference to any one of the fourth aspect or the first and second possible implementations of the fourth aspect, in a third possible implementation, before generating the first image, the processing module is further configured to generate a second image based on the detection result, where the second image includes the target object; and the processing module is further configured to: detect a corresponding area of the target object on the second image, and generate the first image based on the corresponding area.

With reference to any one of the fourth aspect or the first to third possible implementations of the fourth aspect, in a fourth possible implementation, the optical switch is a digital micromirror device DMD.

With reference to any one of the fourth aspect or the first to fourth possible implementations of the fourth aspect, in a fifth possible implementation, the optical switch is a liquid crystal on silicon LCOS.

With reference to any one of the fourth aspect or the first to fifth possible implementations of the fourth aspect, in a sixth possible implementation, the imaging assembly further includes a polarization conversion system PCS, and the PCS is configured to polarize converged reflected light of the target image to obtain the first light beam.

According to a fifth aspect, a projection device is provided, including the imaging assembly according to any one of the fourth aspect or the implementations of the fourth aspect.

## BRIEF DESCRIPTION OF DRAWINGS

To describe the technical solutions in embodiments of this application or the conventional technology more clearly, the following briefly describes the accompanying drawings in descriptions of embodiments and the conventional technology.

FIG. 1 is a schematic diagram of anti-glare of a headlight;
FIG. 2 is a schematic diagram of a structure of a headlight assembly according to an embodiment of this application;
FIG. 3 is a schematic diagram of a structure of a headlight assembly implemented by using a DMD according to an embodiment of this application;
FIG. 4 is a schematic diagram of a structure of a headlight assembly implemented by using an LCOS according to an embodiment of this application;
FIG. 5 is a schematic diagram of a structure of an imaging assembly implemented by using a DMD according to an embodiment of this application; and
FIG. 6 is a schematic diagram of a structure of an imaging assembly implemented by using an LCOS according to an embodiment of this application.

## DESCRIPTION OF EMBODIMENTS

A digital micromirror device DMD is a pixel matrix including a plurality of micromirrors, and can adjust a direction of incident light by rotating a reflector. A size of the matrix corresponds to a resolution of the DMD, for example, 800x600, 1024x768, 1280x720, and 1920x1080. Each micromirror in the DMD can be separately turned on or off.

A liquid crystal on silicon LCOS is a very small-sized matrix liquid crystal display apparatus based on a reflection mode. Each pixel is turned on and off by using a separate circuit. The LCOS controls a projected display image by modulating intensity or a phase of incident light. A size of a pixel matrix corresponds to a resolution of the LCOS. The incident light is converted into polarized light by a polarization conversion system (Polarization Conversion System, PCS). If a liquid crystal is modulated by an external signal and is at a bright display level, after the polarized light is modulated by the LCOS, a polarization direction is rotated by 90 degrees, and the light is displayed in a bright state. When the liquid crystal is at a dark display level, after the polarized light is modulated, the polarization direction does not change, and the light is displayed in a dark state.

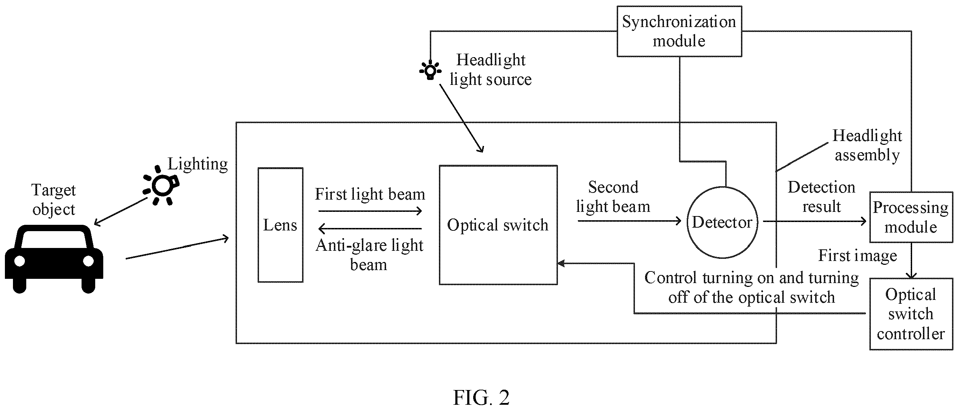

FIG. 2 is a schematic diagram of a structure of a headlight assembly according to an embodiment of this application.

The headlight assembly includes a lens, an optical switch, and a detector. The lens is configured to converge reflected light of a target object outside a headlight, to obtain a first light beam. The target object may be a vehicle, a pedestrian, a road sign, a traffic light, or the like. There may be one or more lenses. The first light beam is incident on the optical switch. The optical switch may be a DMD or an LCOS. The optical switch has a plurality of optical devices. When the optical switch is implemented by using the DMD, the plurality of optical devices include a pixel matrix including a plurality of micromirrors. When the optical switch is implemented by using the LCOS, the plurality of optical devices include a pixel matrix including a liquid crystal on silicon. The optical switch is configured to reflect the first light beam based on a modulation mode to obtain a second light beam.

The headlight assembly may further include an optical switch controller. The optical switch optical controller is configured to control the optical switch to reflect the first light beam based on the modulation mode. Specifically, when the optical switch is implemented by using the DMD, the optical switch controller is a DMD driver. When the optical switch is implemented by using the LCOS, the optical switch controller is an LCOS driver. The optical switch controller is specifically configured to control the plurality of optical devices on the optical switch to reflect the first light beam based on the modulation mode.

One modulation mode may be referred to as one mask. The modulation mode may be preset, or may be randomly generated. There may be a plurality of modulation modes. The optical switch obtains, through reflection, a corresponding second light beam in each modulation mode. Therefore, one modulation mode corresponds to one second light beam. When reflecting the first light beam based on the plurality of modulation modes, the optical switch obtains a plurality of second light beams. A higher resolution of the optical switch indicates a larger quantity of modulation modes. In other words, a larger quantity of pixels corresponding to the optical devices indicates a larger quantity of modulation modes.

Each modulation mode corresponds to turning on of a part and turning off of a part of an area on the optical switch. The detector can detect light reflected by a turned-on area on the optical switch. Based on each modulation mode, the optical switch turns on a first area on the optical switch, and turns off a second area on the optical switch. The second light beam includes light reflected by the first area. The detector is configured to detect the second light beam.

Specifically, the optical switch controller controls an optical device in the first area to be turned on, and controls an optical device in the second area to be turned off. When the optical switch is implemented by using the DMD, the DMD driver controls a micromirror in a first area on the DMD to be turned on and a micromirror in a second area to be turned off. Light reflected by the micromirror in the first area can be detected by the detector, and light reflected by the micromirror in the second area cannot be detected by the detector. When the optical switch is implemented by using the LCOS, the LCOS driver controls a liquid crystal in a first area on the LCOS to be turned on and a liquid crystal in a second area to be turned off. The turned-on liquid crystal is in a bright display level state, and the turned-off liquid crystal is in a dark display level state. Light reflected by the liquid crystal in the first area can be detected by the detector, and light displayed by the liquid crystal in the second area cannot be detected by the detector. The detector may be a light detector.

For the light reflected by the turned-off area on the optical switch, an absorber may be added to shield the light, to prevent the detector from detecting the light. Alternatively, a reflection direction of the turned-off area may be adjusted, to prevent the detector from detecting the light.

After detecting the second light beam, the detector sends a detection result to a processing module. The processing module generates a second image based on the detection result, where the second image is a reconstructed image including the external target object. In an implementation, the detection result includes a light intensity value. When the light intensity value sent by the detector to the processing module accumulates to a specific quantity, the processing module reconstructs, by using a compression perception-based reconstruction algorithm, an image including the external target object. A purpose of the algorithm is to restore an external image by using light intensity data detected by the detector.

For example, the optical switch is implemented by using the DMD. The reconstruction algorithm is as follows:

It is assumed that an original image of a photographed external image is I, and I is an image that needs to be reconstructed by using the reconstruction algorithm. It is assumed that a mask of the DMD is P, and a signal detected by the detector is S. In this case, S = P × 1. Herein, S and I are vectors, and P is a matrix. An intermediate result is enabled to be $u = WI$, and the following minimization problem is solved to obtain u:

$$\mathrm{argmin}_u\{\|S - PW^T u\|_2 + \beta\|u\|_1\}$$

Therefore,

$$u = WW^T u.$$

Herein, W is a wavelet transform matrix or a compact frame transform matrix. Then, the reconstructed image I may be obtained by using the formula $I = W^T u$. This model can be solved by using an alternating direction method of multipliers ADMM.

After obtaining the second image, the processing module detects an area corresponding to the external target object on the second image, and generates the first image based on the area corresponding to the target object. The target object may be detected through headlight detection or deep learning-based target detection, for example, Faster-RCNN and Yolo. The target object may be a person, a vehicle, a taillight of a preceding vehicle, or a headlight or a driver of an oncoming vehicle. In an implementation, the first image is a black-and-white image, the area corresponding to the target object on the first image is black, and another area is white. Based on the first image, the optical switch turns off an area of the optical switch and that corresponds to the target object, and turns on an area other than the target object on the optical switch.

Specifically, the optical switch controller controls an optical device in the area of the optical switch and that corresponds to the target object to be turned on, and controls an optical device in the area other than the target object on the optical switch to be turned off. When the optical switch is implemented by using the DMD, the processing module sends the first image to the DMD driver, and the DMD driver controls, based on the first image, a micromirror in an area of the DMD and that corresponds to the target object to be turned off, and a micromirror in another area to be turned on. When the optical switch is implemented by using the LCOS, the processing module sends the first image to the LCOS driver, and the LCOS driver controls, based on the first image, a liquid crystal in an area of the LCOS and that corresponds to the target object to be turned off, and a liquid crystal in another area to be turned on.

Then, light emitted by a headlight light source is incident to the optical switch. Through reflection of the optical switch, light reflected by the area other than the target object is emitted from the headlight and illuminates an external environment, and light reflected by the area corresponding to the target object is not emitted from the headlight and does not illuminate the target object. In this way, an anti-glare effect is implemented.

The processing module may be a part of the headlight assembly or a part of the headlight, or may be disposed on the vehicle but outside the headlight.

The headlight assembly further includes a synchronization module. The synchronization module is configured to control the headlight light source, the detector, and the processing module, so that the headlight light source and the detector and the processing module work at different time. To be specific, when the detector and the processing module work, the headlight light source does not emit light, or when the headlight light source emits light, the detector and the processing module do not work.

The headlight light source may be a part of the headlight assembly, or may be outside the headlight assembly.

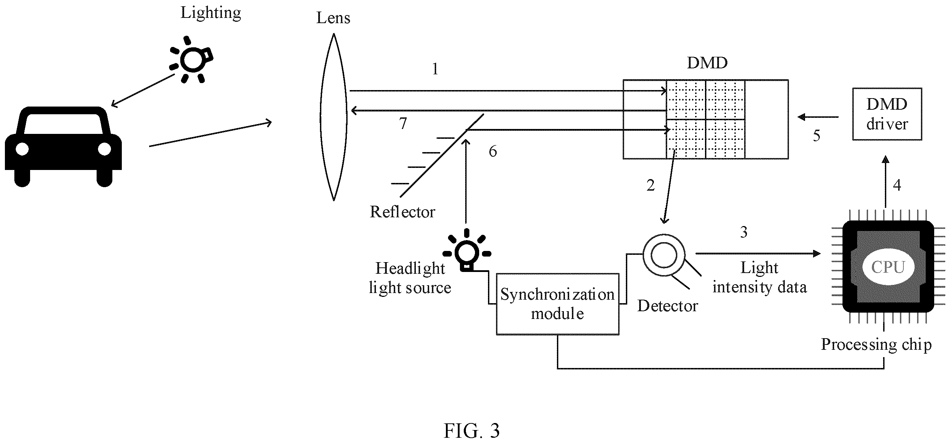

FIG. 3 is a schematic diagram of a structure of a headlight assembly implemented by using a DMD according to an embodiment of this application. In FIG. 3, an optical switch is implemented by using the DMD. An optical switch controller is a DMD driver, and a processing module is implemented by using a CPU. A headlight light source, the processing module, and a detector are controlled by using a synchronization module, so that when the DMD, the detector, the processing module, and the DMD driver perform imaging on an external object, the headlight light source is turned off. In this way, the headlight light source does not affect imaging of the external object. The headlight assembly may further include a reflector, configured to reflect light emitted by the headlight light source to the DMD.

Refer to step numbers in FIG. 3. Light of an object outside the headlight is incident to the DMD through a lens (1). The DMD turns on or turns off a part of an area based on a modulation mode, and light reflected by the DMD is detected by the detector (2). The detector outputs a light intensity value to the processing module (3). When the light intensity value output by the detector to the processing module accumulates to a specific quantity, the processing module reconstructs, by using a compression perception-based reconstruction algorithm, an image including the external object. After the reconstructed image is obtained, the processing module detects the target (for example, a person or a vehicle) on the reconstructed image, and sends an image in which an area corresponding to the target is black and another area is white to the DMD driver (4). The DMD driver turns on or turns off a corresponding area of the DMD based on this image (5). Then, the light emitted by the headlight light source is incident to the DMD through the reflector (6), and no light is emitted from the turned-off area of the DMD (7), so that an anti-glare effect is implemented.

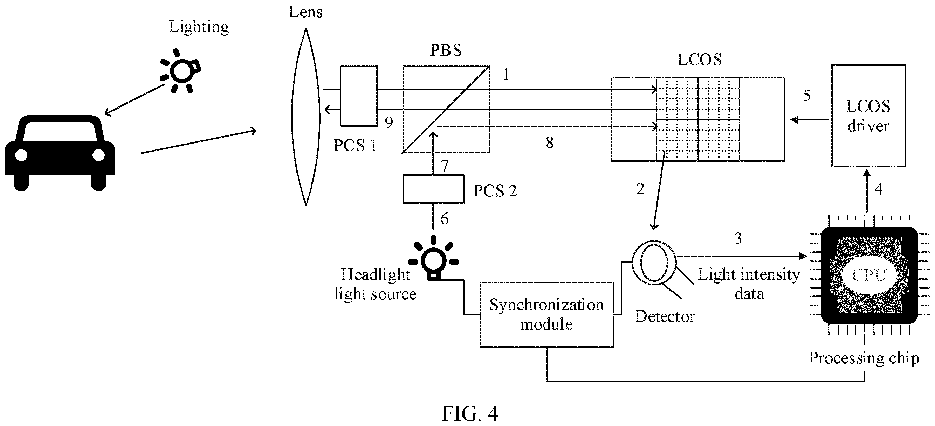

FIG. 4 is a schematic diagram of a structure of a headlight assembly implemented by using an LCOS according to an embodiment of this application. In FIG. 4, an optical switch is implemented by using the LCOS. An optical switch controller is an LCOS driver, and a processing module is implemented by using a CPU. A headlight light source, the processing module, and a detector are controlled by using a synchronization module, so that when the LCOS, the detector, the processing module, and the LCOS driver perform imaging on an external object, the headlight light source is turned off. In this way, the headlight light source does not affect imaging of the external object. Due to different liquid crystal imaging principles, the headlight assembly may include a PCS, configured to convert incident light into polarized light. The PCS may convert the incident light into S-polarized light or P-polarized light. The headlight assembly may further include a polarization beam splitter (Polarization Beam Splitter, PBS), configured to reflect or transmit the polarized light. The PBS can reflect different polarized light based on different types of reflective films pasted on the PBS. For example, if a reflective film that reflects only the S-polarized light is pasted on the PBS, the PBS reflects only the S-polarized light, and does not reflect the P-polarized light. The P-polarized light is transmitted through the PBS. The following uses an example in which polarized light converted by a PCS 1 is P-polarized light, polarized light converted by a PCS 2 is S-polarized light, and a reflective film that reflects only the S-polarized light is pasted on the PBS for description (if the polarized light converted by the PCS 1 is S-polarized light, and the polarized light converted by the PCS 2 is P-polarized light, a reflective film that reflects only the P-polarized light needs to be pasted on the PBS).

Refer to step numbers in FIG. 4. Light of an object outside the headlight passes through the lens, and is converted into P-polarized light through the PCS 1. The P-polarized light is incident to the LCOS (1). The LCOS turns on or turns off a part of an area based on a modulation mode. The P-polarized light becomes S-polarized light after being reflected by the LCOS, and is detected by the detector (2). The detector outputs a light intensity value to the processing module (3). When the light intensity value output by the detector to the processing module accumulates to a specific quantity, the processing module reconstructs, by using a compression perception-based reconstruction algorithm, an image including the external object. After the reconstructed image is obtained, the processing module detects the target (for example, a person or a vehicle) on the reconstructed image, and sends an image in which an area corresponding to the target is black and another area is white to the LCOS driver (4). The LCOS driver turns on or turns off a corresponding area of the LCOS based on this image (5). Then, light emitted by a headlight light source is converted into S-polarized light through the PCS 2 (6 and 7). After being reflected by the PBS, the S-polarized light is incident to the LCOS (8). No light is emitted from the turned-off area of the LCOS. Light reflected by the turned-on area of the LCOS changes from the S-polarized light to P-polarized light. The P-polarized light transmits through the PBS and is emitted through the lens (9). In this way, an anti-glare effect is implemented.

For a process of reconstructing an image and performing target detection by the processing module in embodiments in FIG. 3 and FIG. 4, refer to related descriptions in embodiments in FIG. 2. Details are not described again.

It can be learned from the foregoing that the optical switch is used in a headlight to perform imaging on an external target, and an area corresponding to the target on the optical switch is turned off, so that an effect of turning off a part of an illuminated area of the headlight can be implemented, to implement a purpose of anti-glare. In addition and a process in which coordinate conversion needs to be performed between a location of the camera and a location of the headlight in the conventional technology is also avoided.

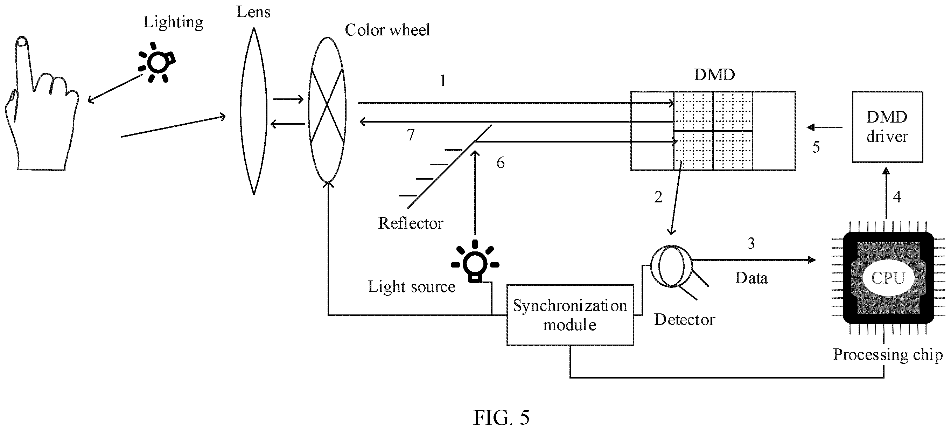

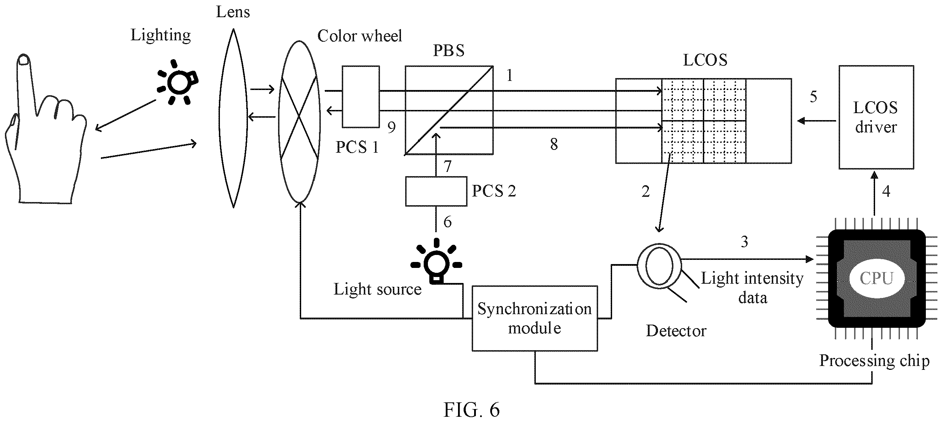

FIG. 5 and FIG. 6 each are a schematic diagram of a structure of an imaging assembly according to an embodiment of this application. In FIG. 5, an optical switch is implemented by using a DMD. In FIG. 6, an optical switch is implemented by using an LCOS. A specific imaging process is similar to that in embodiments in FIG. 2, FIG. 3, and FIG. 4, and details are not described herein again.

The imaging assembly may be applied to a projection device. The imaging assembly may be configured to: detect a location and an action of a hand of a user, determine a current operation of the user based on the location and the action of the hand of the user, update a projected picture based on the operation of the user, and wait for a next operation of the user. For example, if the projection device currently projects an application picture, the application picture includes an icon button, and the imaging assembly detects an action of tapping the icon button by the user, a next picture presented by the imaging assembly is a picture obtained after the application is entered. Alternatively, for example, if the projection device currently projects a photo, and the imaging assembly detects an action of double tapping the photo by the user, a next picture presented by the imaging assembly is an enlarged photo.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A headlight assembly, comprising a lens, an optical switch, and a detector, wherein

   the lens is configured to converge reflected light of a target object to obtain a first light beam;
   the optical switch is configured to reflect the first light beam based on a modulation mode to obtain a second light beam;
   the detector is configured to detect the second light beam; and
   the optical switch is further configured to: based on a first image, turn off an area of the optical switch and that corresponds to the target object, and turn on an area other than the target object on the optical switch, wherein the first image is generated based on the second light beam.

2. The headlight assembly according to claim 1, wherein that the optical switch is configured to reflect the first light beam based on a modulation mode to obtain a second light beam comprises: the optical switch is configured to: based on the modulation mode, turn on a first area on the optical switch, and turn off a second area on the optical switch, wherein the second light beam comprises light reflected by the first area.

3. The headlight assembly according to claim 1 or 2, wherein the headlight assembly further comprises an optical switch controller, and the optical switch controller is configured to control the optical switch to reflect the first light beam based on the modulation mode.

4. The headlight assembly according to claim 3, wherein the optical switch comprises a plurality of optical devices, and that the optical switch is configured to reflect the first light beam based on a modulation mode comprises:

   the plurality of optical devices are configured to reflect the first light beam based on the modulation mode; and
   the optical switch controller is configured to: control an optical device in the first area to be turned on, and control an optical device in the second area to be turned off.

5. The headlight assembly according to claim 4, wherein the optical switch controller is configured to: control an optical device in the area corresponding to the target object to be turned off, and control an optical device in the area other than the target object to be turned on.

6. The headlight assembly according to claims 1 to 5, wherein there are a plurality of modulation modes, and each modulation mode corresponds to one second light beam.

7. The headlight assembly according to claim 6, wherein a larger quantity of pixels corresponding to the optical devices indicates a larger quantity of modulation modes.

8. The headlight assembly according to any one of claims 1 to 7, wherein the headlight assembly further comprises a processing module; the processing module is configured to generate a second image based on a detection result obtained by the detector by detecting the second light beam, wherein the second image comprises the target object; and the processing module is further configured to detect a corresponding area of the target object on the second image, and generate the first image based on the corresponding area.

9. The headlight assembly according to any one of claims 1 to 8, wherein the optical switch is a digital micromirror device DMD.

10. The headlight assembly according to any one of claims 1 to 8, wherein the optical switch is a liquid crystal on silicon LCOS.

11. The headlight assembly according to claim 10, wherein the headlight assembly further comprises a polarization conversion system PCS, and the PCS is configured to polarize converged reflected light of the target image to obtain the first light beam.

12. The headlight assembly according to any one of claims 1 to 11, wherein the headlight assembly further comprises a headlight light source, and the optical switch is further configured to reflect light emitted by the headlight light source.

13. The headlight assembly according to claim 12, wherein the headlight assembly further comprises a synchronization module; the synchronization module is configured to control the headlight light source, the detector, and the processing module; and when the detector and the processing module work, the headlight light source does not emit light; or when the headlight light source emits light, the detector and the processing module do not work.

14. A vehicle, comprising the headlight assembly according to any one of claims 1 to 13.

15. An imaging assembly, comprising a lens, an optical switch, a detector, a color wheel, and a light source, wherein

the optical switch is configured to reflect light emitted by the light source, and the color wheel is configured to add a color to the light reflected by the optical switch, to present a first picture; the lens is configured to converge reflected light of a target object to obtain a first light beam; the optical switch is configured to reflect the first light beam based on a modulation mode to obtain a second light beam; the detector is configured to detect the second light beam; and the optical switch is further configured to reflect, based on a first image, the light emitted by the light source, and the color wheel is further configured to add a color to the light reflected by the optical switch based on the first image, to present a second picture, wherein content of the second picture is different from content of the first picture, and the first image is generated based on the second light beam.

16. The imaging assembly according to claim 15, wherein that the optical switch is configured to reflect the first light beam based on a modulation mode comprises: the optical switch is configured to: based on the modulation mode, turn on a first area on the optical switch, and turn off a second area on the optical switch, wherein the second light beam comprises light reflected by the first area.

17. The imaging assembly according to claim 15 or 16, wherein the imaging assembly further comprises a processing module; and the processing module is configured to generate the first image based on a detection result obtained by the detector by detecting the second light beam, wherein the first image indicates the optical switch to turn on or turn off a part of an area on the optical switch.

18. The imaging assembly according to claim 17, wherein before generating the first image, the processing module is further configured to generate a second image based on the detection result, wherein the second image comprises the target object; and the processing module is further configured to: detect a corresponding area of the target object on the second image, and generate the first image based on the corresponding area.

19. The imaging assembly according to any one of claims 15 to 18, wherein the optical switch is a digital micromirror device DMD.

20. The imaging assembly according to any one of claims 15 to 18, wherein the optical switch is a liquid crystal on silicon LCOS.

21. The imaging assembly according to claim 20, wherein the imaging assembly further comprises a polarization conversion system PCS, and the PCS is configured to polarize converged reflected light of the target image to obtain the first light beam.

22. A projection device, comprising the imaging assembly according to any one of claims 15 to 21.

Lighting area

Area in which a light is turned off

Lighting area

FIG. 1

Synchronization module

Headlight light source

Lighting

Target object

Lens

First light beam

Anti-glare light beam

Optical switch

Second light beam

Detector

Headlight assembly

Detection result

Processing module

First image

Control turning on and turning off of the optical switch

Optical switch controller

FIG. 2

FIG. 3

FIG. 4

FIG. 5

EP 4 397 542 A1

FIG. 6

## INTERNATIONAL SEARCH REPORT

| International application No. |
|---|
| **PCT/CN2022/102101** |

| A. | CLASSIFICATION OF SUBJECT MATTER |
|---|---|
| | B60Q 1/04(2006.01)i; B60Q 1/08(2006.01)i; F21W 107/10(2018.01)i; F21V 14/00(2018.01)i; F21V 13/04(2006.01)i |

According to International Patent Classification (IPC) or to both national classification and IPC

| B. | FIELDS SEARCHED |
|---|---|

Minimum documentation searched (classification system followed by classification symbols)

B60Q; F21W; F21V

Documentation searched other than minimum documentation to the extent that such documents are included in the fields searched

Electronic data base consulted during the international search (name of data base and, where practicable, search terms used)

CNTXT, ENTXTC, DWPI, WPABS, ENTXT: 透镜, 光开关, 数字微镜, DMD, 硅基液晶, LCOS, 反射, 眩光, 炫目, 防眩, lens, reflect, micromirror, liquid crystal on silicon, glare, dazzle.

| C. | DOCUMENTS CONSIDERED TO BE RELEVANT | |
|---|---|---|
| Category* | Citation of document, with indication, where appropriate, of the relevant passages | Relevant to claim No. |
| A | CN 111469756 A (HEFEI FULL-COLOR OPTICAL TECHNOLOGY CO. LTD.) 31 July 2020 (2020-07-31) description, paragraphs 44-104, and figures 1-6 | 1-22 |
| A | CN 101830193 A (FAN HUA) 15 September 2010 (2010-09-15) entire document | 1-22 |
| A | CN 106016130 A (KAISTAR LIGHTING (XIAMEN) CO., LTD.) 12 October 2016 (2016-10-12) entire document | 1-22 |
| A | EP 3139082 A1 (LG ELECTRONICS INC.) 08 March 2017 (2017-03-08) entire document | 1-22 |
| A | WO 2021162041 A1 (KOITO MFG CO., LTD.) 19 August 2021 (2021-08-19) entire document | 1-22 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 August 2022** | **09 September 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/102101**

| Patent document cited in search report | | | Publication date (day/month/year) | Patent family member(s) | | | Publication date (day/month/year) |
|---|---|---|---|---|---|---|---|
| CN | 111469756 | A | 31 July 2020 | CN | 111469756 | B | 31 December 2021 |
| CN | 101830193 | A | 15 September 2010 | CN | 101830193 | B | 19 December 2012 |
| CN | 106016130 | A | 12 October 2016 | US | 2018022266 | A1 | 25 January 2018 |
| | | | | US | 10286835 | B2 | 14 May 2019 |
| EP | 3139082 | A1 | 08 March 2017 | US | 2017113599 | A1 | 27 April 2017 |
| | | | | US | 2018029525 | A1 | 01 February 2018 |
| | | | | KR | 20170028743 | A | 14 March 2017 |
| | | | | US | 9809153 | B2 | 07 November 2017 |
| | | | | US | 10118535 | B2 | 06 November 2018 |
| | | | | EP | 3139082 | B1 | 14 October 2020 |
| | | | | KR | 101811595 | B1 | 22 December 2017 |
| WO | 2021162041 | A1 | 19 August 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111260207